# EUROPÄISCHE PATENTSCHRIFT

(11) **EP 3 722 909 B1**
(45) Veröffentlichungstag und Bekanntmachung des Hinweises auf die Patenterteilung: **20.07.2022**
(21) Anmeldenummer: 19168394.5
(22) Anmeldetag: 10.04.2019
(51) Int. Cl.: G05D 1/02, H04W 4/00, G06Q 10/00

(54) **TRANSPORTSYSTEM FÜR DIE BEFÖRDERUNG VON TRANSPORTSTÜCKEN**
TRANSPORT SYSTEM FOR TRANSPORTING TRANSPORT PIECES
SYSTÈME DE TRANSPORT POUR LE TRANSPORT DES UNITÉS DE TRANSPORT

(43) Veröffentlichungstag der Anmeldung: 14.10.2020
(73) Patentinhaber: Siemens Aktiengesellschaft, 80333 München (DE)
(72) Erfinder: FAZEKAS-ZISCH, Szófia, 78337 Öhningen (DE); SCHULZE, Oliver, 88662 Überlingen (DE); ZISCH, Rainer, 78337 Öhningen (DE)
(74) Vertreter: Siemens Patent Attorneys

(56) Entgegenhaltungen:
- WO-A2-2017/079460
- DE-A1-102009 043 060
- DE-B3-102015 015 770
- US-A1- 2011 035 052

## Beschreibung

Die Erfindung betrifft ein Transportsystem für die Beförderung von Transportstücken, das eine Vielzahl von selbstfahrenden Fahrzeugen, die jeweils zur Aufnahme von mindestens einem Transportstück ausgestaltet sind, umfasst.

Grosse Logistikzentren mit Gepäck-, Post- und/oder Paketsortieranlagen, in welchen Gepäckstücke, Briefe und/oder große Briefe und/oder Pakete verarbeitet werden, werden beispielsweise von der Firma Siemens Postal, Parcel & Airport Logistics GmbH vertrieben.

In derartigen Logistikzentren werden Gepäckstücke, Briefe, Pakete bzw. Sendungen (im Folgenden als Sortierstücke bezeichnet) an einer Vereinzelungsvorrichtung (Stoffeingabe) aus einem Vorrat, z.B. einem Stapel, vereinzelt, von einem Fördersystem entlang eines Förderweges transportiert und an mehreren Sortierausgängen, realisiert zum Beispiel durch Sortierweichen oder Querbandsorter oder Kippvorrichtungen, den jeweiligen Zielstellen, wie z.B. Zielstellen einer Gepäcksortieranlage in einem Flughafen, zugeführt. Während des Transport- oder Sortierprozesses werden die Sortierstücke in die Zielstellen sortiert. Jeder Zielstelle wird für den Sortierprozess mittels einer Sortier-/Transportsteuerung jeweils ein variabler Ziel-Code entsprechend der Sortierlogik bzw. entsprechend dem Sortierprozess zugeordnet. Auch den Sortierstücken wird ein variabler Ziel-Code zugeordnet, welchem entsprechend sie dann in eine Zielstelle sortiert werden. Mehrere Zielstellen können auch den gleichen Ziel-Code haben, beispielsweise bei Zieladressen mit bekannt hohem Sendungsaufkommen. Das bietet sich z. B. an, wenn die Kapazität einer Zielstelle nicht ausreicht, um alle Sortierstücke für diesen Ziel-Code aufzunehmen.

Weiter besteht auch in industriellen Fertigungsanlagen ein hohes Bedürfnis Bauteile, Komponenten und auch die Endprodukte an zuvor bestimmte Stellen in der Fertigungsanlage zu transportieren. Neben fest installierten Fliessbändern werden zu diesem Zweck seit den frühen Neunziger Jahren des letzten Jahrhunderts auch selbstfahrende Fahrzeuge eingesetzt, die das Transportstück zusammen mit einer Information über den Zielort aufnehmen und dieses dann selbsttägig an den dafür vorgesehenen Zielort fahren. Beispielhaft kann hier auf die Fertigung von Waschmaschinen, Wäschetrockner und Geschirrspülmaschinen mit den Fertigungsanlagen der AEG Hausgeräte GmbH in Nürnberg, Deutschland, verwiesen werden.

Zur Steuerung der selbstfahrenden Fahrzeuge wird einerseits eine Kontrollinstanz oder auch Transportsteuerungsinstanz eingesetzt, die dem selbstfahrenden Fahrzeug beispielsweise den nächsten Zielort mitteilt, zu dem sich das selbstfahrende Fahrzeug dann selbsttätig hinbewegt. Ebenso können von dem selbstfahrenden Fahrzeug auch Daten zum Fahrzustand und/oder dem Fahrzeugzustand und dergleichen übertragen werden. Andererseits kann aber auch eine Bestimmungsinformation für das Transportstück fahrzeugseitig gelesen werden, worauf das selbstfahrende Fahrzeug dann den dieser Bestimmungsinformation entsprechenden Zielort selbsttägig ansteuert.

Die Kommunikation zwischen der Kontrollinstanz und den selbstfahrenden Fahrzeugen erfolgt in der Regel im Wege einer drahtlosen Datenübertragung, wie z.B. nach dem Übertragungsstandard nach IEEE 802.11 (WLAN), IEEE 802.15.1 (Bluetooth), IEEE 802.15.4 (ZigBee). Ist die räumliche Ausdehnung des Fahrgebiets der selbstfahrenden Fahrzeuge jedoch sehr gross, kann die Drahtlos-Technologie an ihre Reichweitengrenzen stossen, wodurch die Datenübertragung entweder verlangsamt oder gestört wird oder im schlechtesten Fall vollständig abbricht.

Um die Reichweite derartiger Drahtlos-Technologien zu erhöhen, ist es bekannt sogenannte Repeater einzusetzen, die stationär in Funkreichweite angeordnet werden und die Datenkommunikation entweder per Funk oder auch kabelgestützt weiterleiten. Bei einer Änderung und/oder Erweiterung des Fahrbereichs der selbstfahrenden Fahrzeuge müssen die Repeater jedoch neu angeordnet, versetzt und/oder demontiert werden.

Die deutsche Patentanmeldung DE 10 2009 043 060 A1 offenbart hierzu ein Transportsystem für die Beförderung von Transportstücken, wobei die Transportstücke beispielsweise Bauteile in einer industriellen

Fertigung sein können, wobei das Transportsystem die folgenden Einheiten umfasst:
a) eine Vielzahl von selbstfahrenden Fahrzeugen, die jeweils zur Aufnahme von mindestens einem Transportstück ausgestaltet sind;
b) einer Kontrollinstanz für die selbstfahrenden Fahrzeuge, wobei die Kontrollinstanz und die selbstfahrenden Fahrzeuge über Kommunikationsmittel zum Datenaustausch verfügen, die eine Kommunikation von Fahrzeug zu Kontrollinstanz und/oder von Kontrollinstanz zu Fahrzeug ermöglichen, wobei
c) die Kommunikationsmittel zumindest teilweise als drahtlose Kommunikationsmittel ausgestaltet sind, und wobei
d) die drahtlosen Kommunikationsmittel zumindest teilweise als Repeater für die Kommunikation ausgestaltet sind und jeweils auf einem oder mehreren der Vielzahl von selbstfahrenden Fahrzeugen angeordnet sind.

Hierzu ähnliche Transportsysteme werden auch in der PCT-Offenlegungsschrift WO 2017/079460 A2 und dem deutschen Patent DE 10 2015 015 770 B3 offenbart.

Ausgehend von diesem Stand der Technik liegt der vorliegenden Erfindung daher die Aufgabe zugrunde, ein Transportsystem mit selbstfahrenden Fahrzeugen anzugeben, bei dem der Fahrbereich und die Dichte der selbstfahrenden Fahrzeuge beliebig verändert werden können, ohne dass es zu Beeinträchtigungen der Kommunikation zwischen der Kontrollinstanz und den selbstfahrenden Fahrzeugen kommt.

Diese Aufgabe wird erfindungsgemäss durch die Merkmale des Patentanspruch 1 gelöst. Vorteilhafte Ausgestaltungen der Erfindung sind den weiteren Patentansprüchen 2 bis 4 zu entnehmen.

Besonders zur Sicherstellung einer hinreichenden Dichte von selbstfahrenden mit einem Repeater ausgestatteten Fahrzeugen sieht es die Erfindung nun vor, dass die Kontrollinstanz so ausgestaltet ist, um eine Kommunikation mit einem mit einem Repeater ausgestatteten selbstfahrenden Fahrzeug dahingehend auszuführen, dass sich dieses Fahrzeug an eine vorgebbare Position bewegt. Hierzu kann es schon ausreichend sein, wenn die Kontrollinstanz diesem Fahrzeug die Information einer Zielstelle vorgibt und/oder eine Lageinformation der Zielstelle überträgt. Weiter sieht es die vorliegende Erfindung vor, dass die Kontrollinstanz im Falle eines Vorliegens einer inhomogenen Verteilung der selbstfahrenden Fahrzeuge gezielt mindestens ein mit einem Repeater ausgerüstetes selbstfahrendes Fahrzeug in ein Gebiet mit einer hohen Dichte an selbstfahrenden Fahrzeugen entsendet. Auf diese Weise kann bedarfsweise eine oder mehrere zusätzliche Datenbrücken geschaffen werden, wodurch die Stabilität der Kommunikation gewährleistet bleibt. Ausserdem ist es gemäss der Erfindung vorgesehen, dass die Kontrollinstanz so ausgestaltet ist, dass sie im Falle eines Vorliegens eines neu mit selbstfahrenden Fahrzeugen zu erschliessenden Gebietes gezielt mindestens ein mit einem Repeater ausgerüstetes selbstfahrendes Fahrzeug in dieses Gebiet entsendet. Auf diese Weise wird ebenso für ein neues Gebiet eine oder mehrere Datenbrücke geschaffen, sodass auch in diesem neu erschlossenen Gebiet von Beginn an eine zuverlässige Kommunikation ermöglicht ist. Eine fixe Installation von ortsfest angeordneten Repeatern wird hierdurch obsolet.

Ein gemäss der Erfindung ausgestaltetes Transportsystem zeichnet sich so dadurch aus, dass sämtliche mit einem Repeater ausgestattete selbstfahrenden Fahrzeug somit Stützpunkte für die drahtlose Kommunikation sind und so die zu überbrückenden Funkstrecken bis zum einem systemeigenen Zugangspunkt in viele kurze Funkstrecken von Repeater zu Repeater aufteilen, wodurch reichweitenbedingte Probleme vollständig eliminiert werden können. Zudem kann bei einer Anpassung des Fahrbereichs die funkmässige Erschliessung durch die in diesen Fahrbereichen zirkulierenden selbstfahrenden Fahrzeuge ad hoc vorgenommen und auf entsprechende hohe Fahrzeugdichten angemessen reagiert werden.

In einer vorteilhaften Ausgestaltung der vorliegenden Erfindung können mehrere, vorzugsweise sogar alle, selbstfahrenden Fahrzeuge mit einem Repeater ausgestattet sein. Auf diese Weise bildet sich ein engmaschiges Netz von Repeatern zur drahtlosen Kommunikation zwischen der Kontrollinstanz und selbst den am weitesten von den Zugangspunkten operierenden selbstfahrenden Fahrzeugen, wodurch eine ungestörte Kommunikation auch über grosse Distanzen sichergestellt werden kann.

Zur Erhöhung der Signalqualität und/oder einer maximal möglichen Datenübertragungsrate kann es vorgesehen sein, dass eine Datenübertragung parallel über verschiedene Repeater ausführbar ist.

In dem vorstehend genannten Transportsystem können die Transportstücke Bauteile in einer industriellen Fertigung und/oder Sortierstücke, wie Briefe, Pakete, Taschen, Koffer oder dergleichen, in einem Logistikstrom sein.

Typischerweise kann in dem Transportsystem die Kommunikation mit dem selbstfahrenden Fahrzeug Daten zum Fahrzustand, wie z.B. Position, Fahrtrichtung, Geschwindigkeit, und/oder zum Fahrzeugzustand, wie z.B. Wartungszustand, Akkuladestand, und/oder zum Beladezustand und/oder zum aktuell und/oder als nächstes anzusteuernden Zielort umfassen.

Zudem kann die Kontrollinstanz die Position der zirkulierenden Fahrzeuge ermitteln und ggfs. Verteilungsprofile erstellen.

In einer weiteren vorteilhaften Ausgestaltung der Erfindung kann es vorgesehen sein, dass der Repeater eines selbstfahrenden Fahrzeugs Funksignale direkt in eine kabelgebundene Infrastruktur überträgt. Dies kann beispielsweise während eines Ladevorgangs erfolgen, wenn das selbstfahrende Fahrzeug beim Ladevorgang auch mit einem Dateninterface gekoppelt wird.

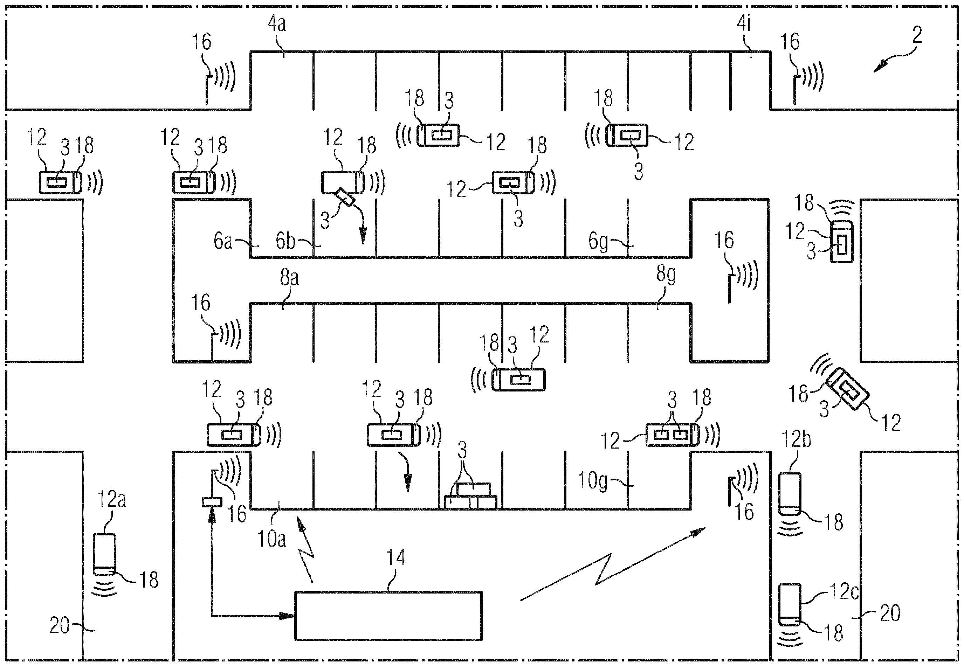

Vorteilhafte Ausgestaltungen der vorliegenden Erfindung werden nachfolgend detailliert mit Bezug auf die Zeichnung näher erläutert. Dabei zeigt die Figur in schematischer Darstellung ein Transportsystem 2 für Gepäckstücke 3 in einem Flughafenterminal. Zur Aufnahme und zum Transport der Gepäckstücke 3 zu für im weiteren Logistikstrom vorgesehene Zielstellen 4a bis 4i, 6a bis 6g, 8a bis 8g und 10a bis 10g sind selbstfahrende batteriebetriebene Fahrzeuge 12 vorgesehen, die mit entsprechenden Sensoren für die Navigation innerhalb des Transportsystem 2 ausgestattet sind. Diese Sensoren können beispielsweise GPS-Sensoren, oder Magnetfeld- und/oder E-Feldsensoren sein, die sich an im Transportsystem 2 verbauten Sendern und Stromschleifen orientieren. Das Transportsystem 2 verfügt weiter über eine Kontrollinstanz 14, die zum einen die Steuerung und/oder die Zielinformationsversorgung für die autonom fahrenden Fahrzeuge 12 übernimmt und zum anderen auch den logistischen Prozess der Gepäckstücksortierung steuert und so auch einem mit einem Gepäckstück beladenen Fahrzeug 12 mitteilt, wohin dieses Gepäckstück 3 zu transportieren ist. Alternativ oder ergänzend hierzu könnten die selbstfahrenden Fahrzeuge 12 aber auch über Adresserfassungssysteme, wie z.B. Barcode-Reader, verfügen, mit denen sie die Adresse eines gerade auf das Fahrzeug geladenen Gepäckstücks 3 selbst erfassen können und dann ggfs. auch noch in Zusammenwirkung mit der Kontrollinstanz 14 selbsttätig ermitteln, wohin das Gepäckstück 3 zu transportieren ist. Ob hierbei eine erneute Kommunikation mit der Kontrollinstanz 14 erforderlich ist, hängt wesentlich davon ab, ob das selbstfahrende Fahrzeug aus der gelesenen/erfassten Adressinformation des Gepäckstücks 3 auch tatsächlich in der Lage ist, die physische Position des Zielorts ermitteln zu können. An der Zielstelle selbst kann das Gepäckstück 3 dann von dem Fahrzeug an die Zielstelle übergeben werden, beispielsweise durch ein auf dem Fahrzeug angeordnetes und dort antreibbares Förderband oder durch eine Kippvorrichtung oder eine sonstwie gestaltete Entladevorrichtung. Auch ein Zielstellen-seitig angeordneter Greifmechanismus oder ähnliches wäre hier realisierbar.

Zur Kommunikation zwischen den selbstfahrenden Fahrzeugen 12 und der Kontrollinstanz 14 sind sogenannte Access-Punkte 16 vorgesehen, die mit der Kontrollinstanz 14 entweder kabelgestützt oder auch kabellos über eine Luftschnittstelle verbunden sind. Diese Access-Punkte 16 sind zwar einigermassen gleichmässig und bedarfsgerecht über das Transportsystem 2 verteilt angeordnet, aber es können auch hier stets gewisse Reichweiten- und/oder Signalstärkenproblem auftreten. Aus diesem Grund ist in dem vorliegenden Ausführungsbeispiel jedes der selbstfahrenden Fahrzeuge 12 mit einem Wireless Repeater 18 ausgerüstet, welche die aus der Umgebung aufgenommene Kommunikation erneut abstrahlt und somit eine Brückenfunktion für die Kommunikationsübermittlung wahrnimmt. Auf diese Weise kann die von einem selbstfahrenden Fahrzeug abgestrahlte Kommunikation über parallele Weg bis zu einem oder mehreren der Access-Punkte 16 geleitet werden, wodurch sich eine hohen Übertragungssicherheit und - rate bei der Kommunikation der Fahrzeuge 12 mit der Kontrollinstanz 14 ergibt.

Da jedes selbstfahrende Fahrzeug auch eine fahrzeugeigene ID aufweist, die beispielsweise fester Bestandteil in den Headern von vom Fahrzeug 12 abgestrahlten Datenframes ist, kann die Kontrollinstanz 14 die Bewegung der Fahrzeuge 12 nachverfolgen und gewisse weitere zweckdienliche Auswertungen, wie die Dichteverteilung der Fahrzeuge und dergleichen, vornehmen. Hierzu kann die Kommunikation mit einem selbstfahrenden Fahrzeug Daten zum Fahrzustand, wie z.B. Position, Fahrtrichtung, Geschwindigkeit, und/oder zum Fahrzeugzustand, wie z.B. Wartungszustand, Akkuladestand, und/oder zum Beladezustand und/oder zum aktuell und/oder als nächstes anzusteuernden Zielort umfassen.

Daher kann die Kontrollinstanz 14 hier vorliegend auch die Fähigkeit aufweisen, ganz gezielt mit einem bestimmten selbstfahrenden Fahrzeug 12 zu kommunizieren und diesem Fahrzeug 12 eine Information zu übertragen, die es dem selbstfahrenden Fahrzeug 12 ermöglicht sich an eine vorgebbare Position innerhalb des Transportsystems 2 zu bewegen. Die Kontrollinstanz 14 kann weiter auch aufgrund der Kommunikation mit den selbstfahrenden Fahrzeugen 12 so ausgestaltet sein, dass sie im Falle eines Vorliegens einer inhomogenen Verteilung der selbstfahrenden Fahrzeuge gezielt mindestens ein mit einem Wireless Repeater 18 ausgerüstetes selbstfahrendes Fahrzeug 12 in ein Gebiet mit einer hohen Dichte an selbstfahrenden Fahrzeugen 12 entsendet. Auf diese Weise kann bedarfsweise eine oder mehrere zusätzliche Datenbrücken geschaffen werden, wodurch die Stabilität der Kommunikation gewährleistet bleibt.

Weiter zeigt die Figur auch den Fall, dass die Kontrollinstanz 14 bei Vorliegen eines neu mit selbstfahrenden Fahrzeugen 12 zu erschliessenden Gebiets 20 gezielt mindestens ein mit einem Wireless Repeater 18 ausgerüstetes selbstfahrendes Fahrzeug 12a, 12b, 12c in dieses Gebiet 20 entsendet, ohne dass diese Fahrzeuge 12am 12b, 12c schon selbst ein Gepäckstück 3 tragen müssten. Auf diese Weise wird ebenso für das neue Gebiet 20 eine oder mehrere Datenbrücke geschaffen, sodass auch in diesem neu erschlossenen Gebiet 20 von Beginn an eine zuverlässige Kommunikation ermöglicht ist.

## Patentansprüche

1. Transportsystem (2) für die Beförderung von Transportstücken (3), wobei die Transportstücke (3) Bauteile in einer industriellen Fertigung und/oder Sortierstücke, wie Briefe, Pakete, Taschen, Koffer oder dergleichen, in einem Logistikstrom sind, umfassend:
a) eine Vielzahl von selbstfahrenden Fahrzeugen (12), die jeweils zur Aufnahme von mindestens einem Transportstück (3) ausgestaltet sind;
b) einer Kontrollinstanz (14) für die selbstfahrenden Fahrzeuge (12), wobei die Kontrollinstanz (14) und die selbstfahrenden Fahrzeuge (14) über Kommunikationsmittel zum Datenaustausch verfügen, die eine Kommunikation von Fahrzeug (12) zu Kontrollinstanz (14) und/oder von Kontrollinstanz (14) zu Fahrzeug (12) ermöglichen, wobei
c) die Kommunikationsmittel zumindest teilweise als drahtlose Kommunikationsmittel ausgestaltet sind, und wobei
d) die drahtlosen Kommunikationsmittel zumindest teilweise als Repeater (18) für die Kommunikation ausgestaltet sind und jeweils auf einem oder mehreren der Vielzahl von selbstfahrenden Fahrzeugen (12) angeordnet sind,
**dadurch gekennzeichnet, dass**
die die Kontrollinstanz (14) so ausgestaltet ist, dass fallweise
i) eine Kommunikation mit einem mit einem Repeater (18) ausgestattetes selbstfahrendes Fahrzeug (12) dahingehend ausführbar ist, dass sich dieses Fahrzeug (12) an eine vorgebbare Position bewegt; und
ii) die Kontrollinstanz (14) aufgrund der Kommunikation mit den selbstfahrenden Fahrzeugen (12) so ausgestaltet ist, dass sie im Falle eines Vorliegens einer inhomogenen Verteilung der selbstfahrenden Fahrzeuge (12) gezielt mindestens ein mit einem Repeater (18) ausgerüstetes selbstfahrendes Fahrzeug (12) in ein Gebiet mit einer hohen Dichte an selbstfahrenden Fahrzeugen (12) entsendet; und
iii) die Kontrollinstanz (14) so ausgestaltet ist, dass sie im Falle eines Vorliegens eines neu mit selbstfahrenden Fahrzeugen (12) zu erschliessenden Gebiets (20) gezielt mindestens ein mit einem Repeater (18) ausgerüstetes selbstfahrendes Fahrzeug (12) in dieses Gebiet entsendet.

2. Transportsystem (2) nach Anspruch 1,
**dadurch gekennzeichnet, dass**
mehrere, vorzugsweise alle, selbstfahrenden Fahrzeuge (12) mit einem Repeater (18) ausgestattet sind.

3. Transportsystem (2) nach Anspruch 1 oder 2,
**dadurch gekennzeichnet, dass**
eine Datenübertragung parallel über verschiedene Repeater (18) ausführbar ist.

4. Transportsystem (2) nach einem der vorangehenden Ansprüche,
**dadurch gekennzeichnet, dass**
die Kommunikation mit einem selbstfahrenden Fahrzeug (12) Daten zum Fahrzustand, wie z.B. Position, Fahrtrichtung, Geschwindigkeit, und/oder zum Fahrzeugzustand, wie z.B. Wartungszustand, Akkuladestand, und/oder zum Beladezustand und/oder zum aktuell und/oder als nächstes anzusteuernden Zielort umfasst.

## Claims

1. Transport system (2) for the conveying of transport items (3), wherein the transport items (3) are structural parts in industrial manufacturing and/or sorting items, such as letters, packages, bags, suitcases of the like, in a logistics flow, comprising:
a) a large number of self-driving vehicles (12), which are in each case embodied for accommodating at least one transport item (3);
b) a monitoring entity (14) for the self-driving vehicles (12), wherein the monitoring entity (14) and the self-driving vehicles (14) possess communication means for exchanging data, which enable communication from vehicle (12) to monitoring entity (14) and/or from monitoring entity (14) to vehicle (12), wherein
c) the communication means are at least partially embodied as wireless communication means, and wherein
d) the wireless communication means are at least partially embodied as repeaters (18) for the communication and are in each case arranged on one or more of the large number of self-driving vehicles (12),
**characterised in that**
the monitoring entity (14) is embodied such that, on a case-by-case basis,
i) communication with a self-driving vehicle (12) equipped with a repeater (18) can be carried out to the effect that said vehicle (12) is moved to a predefinable position; and
ii) the monitoring entity (14), due to the communication with the self-driving vehicles (12), is embodied such that, in the event of a presence of an inhomogeneous distribution of the self-driving vehicles (12), it dispatches at least one self-driving vehicle (12) equipped with a repeater (18) into an area with a high density of self-driving vehicles (12) in a targeted manner; and
iii) the monitoring entity (14) is embodied such that, in the event of a presence of an area (20) to be made newly accessible to self-driving vehicles (12), it dispatches at least one self-driving vehicle (12) equipped with a repeater (18) into said area in a targeted manner.

2. Transport system (2) according to claim 1,
**characterised in that**
a plurality of, preferably all, self-driving vehicles (12) are equipped with a repeater (18).

3. Transport system (2) according to claim 1 or 2,
**characterised in that**
a data transfer can be carried out in parallel via various repeaters (18).

4. Transport system (2) according to one of the preceding claims,
**characterised in that**
the communication with a self-driving vehicle (12) comprises data regarding the travel state, such as position, travel direction, speed, for example, and/or regarding the vehicle state, such as maintenance state, battery state, for example, and/or regarding the loading state and/or regarding the destination to be headed for currently and/or next.

## Revendications

1. Système de transport (2) pour le transport de pièces à transporter (3), les pièces à transporter (3) étant des composants dans une production industrielle et/ou des pièces à trier, telles que des lettres, des paquets, des pochettes, des valises ou autres similaires, dans un flux logistique, comprenant :
a) une pluralité de véhicules automoteurs (12) qui sont respectivement conçus pour recevoir au moins une pièce à transporter (3) ;
b) une instance de contrôle (14) pour les véhicules automoteurs (12), l'instance de contrôle (14) et les véhicules automoteurs (14) disposant de moyens de communication pour échanger des données, lesquels permettent une communication entre véhicule (12) et instance de contrôle (14) et/ou entre instance de contrôle (14) et véhicule (12),
c) les moyens de communication étant conçus au moins en partie en tant que moyens de communication sans fil et
d) les moyens de communication sans fil étant conçus au moins en partie en tant que répéteurs (18) pour la communication et étant respectivement agencés sur un ou plusieurs des véhicules de la pluralité de véhicules automoteurs (12),
**caractérisé en ce que**
l'instance de contrôle (14) est conçue de telle sorte que, au cas par cas,
i) une communication avec un véhicule automoteur (12) équipé d'un répéteur (18) est exécutable en ce sens que ce véhicule (12) se déplace vers une position prédéfinissable ; et
ii) l'instance de contrôle (14) est, en raison de la communication avec les véhicules automoteurs (12), conçue de telle sorte que, en présence d'une répartition non homogène des véhicules automoteurs (12), elle envoie de manière ciblée au moins un véhicule automoteur (12) équipé d'un répéteur (18) dans une zone avec une concentration importante de véhicules automoteurs (12) ; et
iii) l'instance de contrôle (14) est conçue de telle sorte que, en présence d'une zone (20) à ouvrir nouvellement à des véhicules automoteurs (12), elle envoie de manière ciblée au moins un véhicule automoteur (12) équipé d'un répéteur (18) dans cette zone.

2. Système de transport (2) selon la revendication 1, **caractérisé en ce que** plusieurs, de préférence tous les véhicules automoteurs (12) sont équipés d'un répéteur (18).

3. Système de transport (2) selon la revendication 1 ou 2, **caractérisé en ce qu'**une transmission de données peut être exécutée parallèlement via différents répéteurs (18).

4. Système de transport (2) selon l'une des revendications précédentes, **caractérisé en ce que** la communication avec un véhicule automoteur (12) comprend des données sur l'état de marche, telles que, par exemple, la position, le sens de la marche, la vitesse, et/ou sur l'état du véhicule, telles que, par exemple, l'état d'entretien, l'état de charge de la batterie, et/ou sur l'état de chargement et/ou sur une destination à prendre actuellement et/ou ensuite.
